# EUROPEAN PATENT SPECIFICATION

(11) **EP 2 615 885 B1**
(45) Date of publication and mention of the grant of the patent: **05.08.2015**
(21) Application number: 11783066.1
(22) Date of filing: 02.06.2011
(51) Int. Cl.: H04W 88/12, H04W 92/14

(54) **METHOD FOR OBTAINING SUBSCRIBER IDENTITY AND BASE STATION CONTROLLER**
VERFAHREN FÜR DEN ERHALT EINER TEILNEHMERIDENTITÄT UND BASISSTATIONSSTEUERUNG
PROCÉDÉ D'OBTENTION D'IDENTITÉ D'ABONNÉ ET CONTRÔLEUR DE STATION DE BASE

(30) Priority: 06.09.2010 CN 201010275215
(43) Date of publication of application: 17.07.2013
(73) Proprietor: Huawei Technologies Co., Ltd., Longgang District Shenzhen, Guangdong 518129 (CN)
(72) Inventor: JIANG, Bei, Shenzhen Guangdong 518129 (CN); HOU, Zhiqiang, Shenzhen Guangdong 518129 (CN)
(74) Representative: Epping - Hermann - Fischer
(86) International application number: PCT/CN2011/075179
(87) International publication number: WO 2011/144149

(56) References cited:
- EP-A1- 2 160 049
- WO-A2-2007/136339
- CN-A- 101 026 856
- CN-A- 101 548 559
- CN-A- 101 610 247
- CN-A- 101 945 503
- US-A1- 2005 271 209
- US-A1- 2007 047 591

## Description

### FIELD OF THE INVENTION

The present invention relates to the field of mobile communication technologies, and in particular, to a method for obtaining a user identity, and a base station controller.

### BACKGROUND OF THE INVENTION

In a mobile communication network, if a core network enables a temporary user identity (Temporary Mobile Station Identity, TMSI) reallocation function, the user accesses the mobile network using the TMSI. A base station controller (Base Station Controller, BSC) needs to obtain a user identity such as the user's international mobile subscriber identity (International Mobile Subscriber Identity, IMSI) or international mobile equipment identity (International Mobile Equipment Identity, IMEI) in some circumstances for user tracking, positioning, and the like.

The prior art provides a method for obtaining a user identity. The method mainly includes the following:
A BSC sends an identity request (Identity Request) message to a mobile station (Mobile Station, MS) by simulating a mobile switching center (Mobile Switching Center, MSC), where the identity request message is used to request a user identity; the MS receives the identity request message, and returns an identity response (Identity Response) message to the BSC, where the identity response message carries the user identity. The BSC can obtain the user identity of the mobile user according to the identity response message, without forwarding the user identity to the MSC.

Both the identity request message and the identity response message are mobility management (Mobility Management, MM) messages in non access stratum messages. In byte definitions of non access stratum message types, Bit 7 and Bit 8 are used to check a sequence number (Sequence Number, SN) of a message. Table 1 is a byte definition of a type field of a non access stratum message in a version earlier than R99.

**Table 1**

| | | | |
|---|---|---|---|
| 8 | 7 | 6 | 0 |
| 0 | N(SD) or 0 | Message type (Message type) | |

For a version earlier than R99, Bit 7 in the byte definition serves as a message sequence number. The sequence number increases by 1 whenever the MS sends an uplink non access stratum message, based on which the mobile switching center may check the sequence number after receiving an uplink non access stratum message sent by the mobile station, so as to ensure integrity of the message. The sequence number of a downlink non access stratum message is 0 fixedly.

Table 2 is a byte definition of a type field of a non access stratum message in a version later than R99.

**Table 2**

| | | | |
|---|---|---|---|
| 8 | 7 | 6 | 0 |
| N(SD) or 0 | | Message type (Message type) | |

For a version later than R99, Bit 7 and Bit 8 in the uplink non access stratum message serve as a Sequence Number. The sequence number increases by 1 whenever the MS sends an uplink non access stratum message, based on which the core network may check the sequence number to ensure integrity of the uplink non access stratum message. The sequence number of a downlink non access stratum message is 0 fixedly.

In the prior art, the BSC sends an identity request message to a mobile station by simulating a mobile switching center; after the mobile station sends an uplink non access stratum message in response to the identity request message, the sequence number of the uplink non access stratum message changes, which is not known by the core network. Consequently, the sequence number is not consistent between the mobile station and the core network, a check error occurs, and a call exception arises.

EP2160049 A1 relates to a method of subscribers of mobile terminals identification managed by a controller in A 2G/3G radio access network. In a 3GPP UMTS and/or GSM network the subscriber identity IMSI and the MS/UE identity IMEI, in spite of being not required at the access network for speech and data calls, they can be nonetheless acquired by a controller either BSC or RNC which simulating the behaviour of the MSC sends an IDENTITY_REQUEST message to the MS/UE, differently from the current specifications where this message is sent only by the Core Network transparently to the BSC/RNC. At the reception of the IDENTITY_REQUEST the MS/UE increments the send sequence number N(SD) included in the IDENTITY_RESPONSE message and sends it to the requester with the requested IMSI/IMEI. The BSC/RNC, at the reception of the IDENTITY_RESPONSE message, transmits a neutral MM_NULL standard message to the Core Network. The latter, ignores the MM_NULL message but increments the value of N(SD) at the network side to avoid of discarding a subsequent message from the MS/UE. The procedure can be repeated for collecting the identities IMSI / IMEI of all MSs/UEs for localization aims and/or mobility management.

### SUMMARY OF THE INVENTION

The embodiments of the present invention provide a method for obtaining a user identity and also a base station controller so as to avoid a call exception caused by asynchronous message sequence numbers and improve stability of a communication system.

In one aspect, a method for obtaining a user identity is provided, including:
sending identity request messages to a mobile station for 2n consecutive times by simulating a mobile switching center, MSC, to request a user identity, where n is a positive integer;
receiving identity response messages sent by the mobile station for 2n times in response to the identity request messages sent for the 2n times; and
forwarding messages from the MSC to the mobile station after the sending the identity request messages to the mobile station for 2n consecutive times by simulating the MSC; wherein no downlink message from the MSC is forwarded to the mobile station in the process of sending the identity request messages for 2n consecutive times.

In another aspect, a base station controller is provided, including:
a third sending unit, configured to send identity request messages to a mobile station for 2n consecutive times by simulating a mobile switching center, MSC, to request a user identity, where n is a positive integer;
a second receiving unit, configured to receive identity response messages sent by the mobile station for 2n times in response to the identity request messages sent for the 2n times; and
a first message forwarding unit, configured to forward messages from the MSC to the mobile station after the sending the identity request messages to the mobile station for 2n consecutive times by simulating the MSC; wherein no downlink message from the MSC is forwarded by the base station controller to the mobile station in the process of sending the identity request messages for 2n consecutive times.

In the technical solutions provided in the embodiments of the present invention, after receiving an identity response message sent by a mobile station, a base station controller sends, to a mobile switching center, an uplink non access stratum message having the same sequence number as the identity response message so that the mobile switching center updates the message sequence number according to the received uplink non access stratum message. In this way, the sequence number is synchronized between the mobile switching center and the mobile station, thereby improving stability of a communication system and preventing the following case: due to asynchronous sequence numbers, errors occur when the mobile switching center checks the sequence number of the received uplink non access stratum message.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for obtaining a user identity according to a first example;
FIG. 2 is a flowchart of a method for obtaining a user identity according to a second embodiment of the present invention;
FIG. 3 is a flowchart of a method for obtaining a user identity according to a third example;
FIG. 4 is a schematic structural diagram of a base station controller according to a fourth example;
FIG. 5 is a schematic structural diagram of a base station controller according to a fifth embodiment of the present invention; and
FIG. 6 is a schematic structural diagram of a base station controller according to a sixth example.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiment of the present invention without creative efforts shall fall within the protection scope of the present invention.

The present invention provides a method for obtaining a user identity and a base station controller. For a better understanding of the technical solutions of the present invention, the following describes embodiments of the present invention in detail with reference to accompanying drawings.

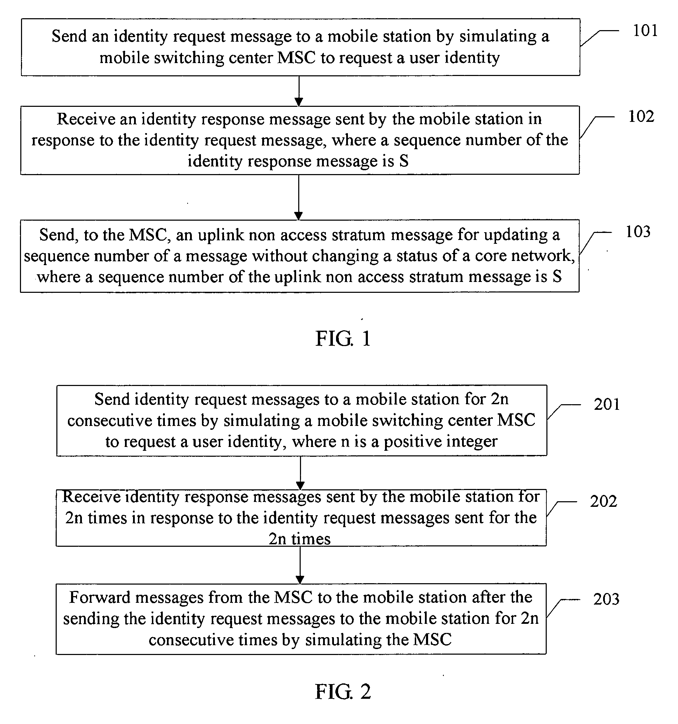

Referring to FIG. 1, FIG. 1 is a flowchart of a method for obtaining a user identity according to a first example.

In this example, a base station controller needs to obtain an identity of a mobile user such as IMSI/IMEI/TMSI, so as to perform tracking, positioning, and the like, on the user. The method for obtaining a user identity according to a first example may include the following steps:
Step 101: Send an identity request message to a mobile station by simulating a mobile switching center MSC to request a user identity.

Specifically, the base station controller sends an identity request message to the mobile station by simulating the mobile switching center, where the identity request message is used to request an identity of the mobile station. Before sending the identity request message, the sequence number of the uplink non access stratum message, which is recorded in the mobile station and the mobile switching center, is S-1.

Step 102: Receive an identity response message sent by the mobile station in response to the identity request message, where a sequence number of the identity response message is S.

Specifically, the base station controller receives an identity response message sent by the mobile station in response to the identity request message. The sequence number of the identity response message is S. The base station controller obtains a corresponding user identity according to the received identity response message without forwarding the message to the mobile switching center. In this case, the sequence number of the uplink non access stratum message is S-1, which is recorded in the mobile switching center.

Step 103: Send, to the MSC, an uplink non access stratum message for updating a message sequence number without changing a status of a core network, where a sequence number of the uplink non access stratum message is S.

After receiving the uplink non access stratum message, the mobile switching center updates the sequence number of the uplink non access stratum message on the mobile switching center from S-1 to S, thereby keeping synchronization of the sequence number of the uplink non access stratum message between the mobile switching center and the mobile station.

The uplink non access stratum message for updating a message sequence number without changing a status of a core network is used to update the sequence number of the message without affecting the processing on the core network, and is ignorable to the core network.

In the technical solution provided in this example, after receiving an identity response message sent by a mobile station, a base station controller sends, to a mobile switching center, an uplink non access stratum message having the same sequence number as the identity response message so that the mobile switching center updates the sequence number of the uplink non access stratum message according to the received uplink non access stratum message. In this way, the sequence number is synchronized between the mobile switching center and the mobile station, thereby improving stability of a communication system and preventing the following case: due to asynchronous sequence numbers, errors occur when the mobile switching center checks the sequence number of the received uplink non access stratum message.

In this example, the uplink non access stratum message sent by the base station controller for updating a message sequence number without changing a status of a core network may be a mobility management blank message in mobility management messages, and the message is used to update the sequence number of the message without affecting the processing on the core network, and is ignorable to the core network.

Referring to FIG. 2, FIG. 2 is a flowchart of a method for obtaining a user identity according to a first embodiment of the present invention.

In this embodiment of the present invention, a base station controller needs to obtain an identity of a mobile user such as IMSI/IMEI/TMSI so as to perform tracking, positioning, and the like, on the user. The method for obtaining a user identity according to a second embodiment of the present invention includes the following steps:
Step 201: Send identity request messages to a mobile station for 2n consecutive times by simulating a mobile switching center MSC to request a user identity, where n is a positive integer.

Specifically, the base station controller sends the identity request messages to the mobile station for 2n consecutive times, where the identity request message is used to request a user identity, and n is a positive integer. No downlink message forwarded from the MSC is forwarded in the process of sending the identity request messages consecutively.

Step 202: Receive identity response messages sent by the mobile station for 2n times in response to the identity request messages sent for the 2n times.

In this embodiment of the present invention, the mobile station returns identity response messages to the base station controller after receiving the identity request messages sent by the base station controller by simulating the MSC. In this embodiment of the present invention, the base station controller sends the identity request messages to the mobile station for 2n consecutive times, and therefore, the mobile station returns the identity response messages for 2n consecutive times. The base station controller obtains corresponding user identities according to the received identity response messages, without forwarding the user identities to the mobile switching center.

Step 203: Forward messages from the MSC to the mobile station after the identity request messages are sent for 2n consecutive times to the mobile station by simulating the MSC.

Specifically, after sending the identity request messages to the mobile station for 2n consecutive times by simulating the MSC, the base station controller forwards a downlink message from the MSC to the mobile station.

In the embodiment of the present invention, a base station controller sends identity request messages to a mobile station for 2n consecutive times; if a message sequence number recorded by the mobile station before the identity request messages are sent to the mobile station for 2n consecutive times is S, the sequence number of an identity response message received by the base station controller at a 2nth time is (S+2*n)mod 2 that is equal to S. That is, at this time, the sequence number of a non access stratum layer message, which is recorded in the mobile station, is the same as the sequence number previously recorded before the base station controller sends the identity request messages for 2n times. In this way, the sequence number is restored, and the message sequence number recorded in the mobile station is synchronized with that recorded on the core network.

In the method for obtaining a user identity according to the first embodiment of the present invention, by sending the identity request messages to the mobile station for 2*n consecutive times, the base station controller receives the identity response messages sent by the mobile station for 2n times. In this way, the sequence number recorded on the mobile station changes back to the sequence number existent before the base station controller sends the identity request messages for 2n times, and the sequence number is synchronized between the mobile switching center and the mobile station, thereby improving stability of a communication system and preventing the following case: due to asynchronous sequence numbers, errors occur when the mobile switching center checks the sequence number of the received uplink non access stratum message.

Further, in the method for obtaining the user identity according to the first embodiment of the present invention, the step in which the base station controller sends the identity request messages to the mobile station for 2n consecutive times may specifically include:
1) Sending the identity request messages to the mobile station for 2n consecutive times if a protocol version supported by both the mobile station and the MSC is earlier than R99.
   Specifically, when a network element is interconnected, the base station controller may obtain the protocol version supported by the mobile switching center through parameter records of the mobile switching center. The base station controller may also parse a report message received from the mobile station to obtain information about the protocol version supported by the mobile station. If the protocol version supported by both the mobile station and the MSC, which is obtained by the base station controller, is lower than Release 99 (R99), it indicates that Bit 7 in a type field definition of the non access stratum message is used as a sequence number. In this case, it is necessary only to send the identity request messages to the mobile station for 2*n consecutive times.
2) Sending the identity request messages to the mobile station for 4n consecutive times if the protocol version supported by both the mobile station and the MSC is R99 or a version later than R99.

Specifically, if the protocol version supported by both the mobile station and the MSC, which is obtained by the base station controller, is Release 99 or higher than Release 99, it indicates that Bit 7 and Bit 8 in the type field definition of the non access stratum message are used as a sequence number. In this case, it is necessary to send the identity request messages to the mobile station for 4*n consecutive times.

If the message sequence number recorded by the mobile station before the identity request messages are sent to the mobile station for 4*n consecutive times is S, the mobile station sends identity response messages to the base station controller for 4*n times after receiving the identity request messages for 4*n times. At this time, the message sequence number recorded in the mobile station is (S+4*n)mod 4 = S, which is kept synchronous to the sequence number recorded in the core network.

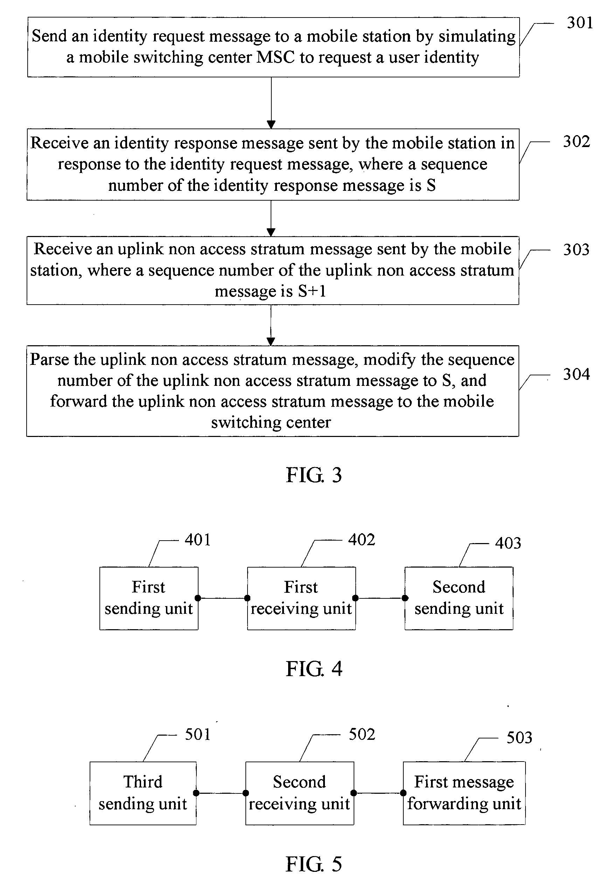

Referring to FIG. 3, FIG. 3 is a flowchart of a method for obtaining a user identity according to a second example.

In the embodiments of the present invention, a base station controller needs to obtain an identity of a mobile user such as IMSI/IMEI/TMSI so as to perform tracking, positioning, and the like, on the user.

The method for obtaining a user identity according to a second example may include the following steps:
Step 301: Send an identity request message to a mobile station by simulating a mobile switching center MSC to request a user identity.

Specifically, the base station controller may send an identity request message to the mobile station by simulating the mobile switching center MSC. The sequence number of the non access stratum message, which is recorded in the mobile station and the mobile switching center, is S-1 before the identity request message is sent.

After receiving the identity request message, the mobile station returns an identity response message to the MSC, where the identity response message carries an identity of the mobile station.

Step 302: Receive an identity response message sent by the mobile station in response to the identity request message, where a sequence number of the identity response message is S.

Specifically, the base station controller receives an identity response message sent by the mobile station in response to the identity request message, where a sequence number of the identity response message is S. The base station controller obtains a corresponding user identity according to the received identity response message, without forwarding the user identity to the mobile switching center.

Step 303: Receive an uplink non access stratum message sent by the mobile station, where a sequence number of the uplink non access stratum message is S+1.

Specifically, the mobile station may send an uplink non access stratum message, and the base station controller receives the uplink non access stratum message sent by the mobile station, where the sequence number of the uplink non access stratum message is S+1.

Step 304: Parse the uplink non access stratum message, modify the sequence number of the uplink non access stratum message to S, and forward the uplink non access stratum message to the mobile switching center.

Specifically, the base station controller modifies the sequence number in the uplink non access stratum message from S+1 to S, and then sends the uplink non access stratum message with the modified sequence number to the mobile switching center. After receiving the uplink non access stratum message, the mobile switching center performs a check according to the sequence number S of the message.

In the method for obtaining a user identity according to the second example, by modifying a sequence number in an uplink non access stratum message sent by the mobile station, the sequence number may be synchronized between the mobile switching center and the mobile station, thereby improving stability of a communication system and preventing the following case: due to asynchronous sequence numbers, errors occur when the mobile switching center checks the sequence number of the received uplink non access stratum message.

Besides, in the method for obtaining a user identity according to the second example, the uplink non access stratum messages may include a call control (Call Control, CC) message, a group call control (Group Call Control, GCC) message, a broadcast call control (Broadcast Call Control, BCC) message, a mobility management (Mobility Management, MM) message, a supplementary service (Supplementary Service, SS) message, or a location services (Location Services, LS) message.

The detailed description given above is about a method for obtaining a user identity according to an embodiment of the present invention, and the following provides a base station controller corresponding to the method embodiment of the present invention.

Referring to FIG. 4, FIG. 4 is a schematic structural diagram of a base station controller according to a third example.

The base station controller provided in the third example includes:
a first sending unit 401, configured to send an identity request message to a mobile station by simulating a mobile switching center MSC to request a user identity;
a first receiving unit 402, configured to receive an identity response message sent by the mobile station in response to the identity request message, where a sequence number of the identity response message is S; and
a second sending unit 403, configured to send, to the MSC, an uplink non access stratum message for updating a message sequence number without changing a status of a core network, where a sequence number of the uplink non access stratum message is S.

The base station controller provided in the third example may be used to implement the method for obtaining a user identity according to the first example. For the detailed process, reference may be made to the foregoing method embodiment for obtaining a user identity, which is not repeated here any further.

After receiving an identity response message sent by a mobile station, a base station controller provided in the example sends, to a mobile switching center, an uplink non access stratum message having the same sequence number as the identity response message so that the mobile switching center updates the sequence number of the uplink non access stratum message according to the received uplink non access stratum message. In this way, the sequence number is synchronized between the mobile switching center and the mobile station, thereby improving stability of a communication system and preventing the following case: due to asynchronous sequence numbers, errors occur when the mobile switching center checks the sequence number of the received uplink non access stratum message.

Referring to FIG. 5, FIG. 5 is a schematic structural diagram of a base station controller according to a second embodiment of the present invention.

The base station controller provided in the fifth embodiment of the present invention includes:
a third sending unit 501, configured to send identity request messages to a mobile station for 2n consecutive times by simulating a mobile switching center MSC to request a user identity, where n is a positive integer;
a second receiving unit 502, configured to receive identity response messages sent by the mobile station for 2n times in response to the identity request messages sent for the 2n times; and
a first message forwarding unit 503, configured to forward messages from the MSC to the mobile station after the sending the identity request messages to the mobile station for 2n consecutive times by simulating the MSC.

The base station controller provided in the second embodiment of the present invention may be used to implement the method for obtaining a user identity according to a second embodiment of the present invention. For the detailed process, reference may be made to the foregoing method embodiment for obtaining a user identity, which is not repeated here any further.

Further, the third sending unit 201 in the base station controller provided in the embodiment of the present invention may be further configured to:
send the identity request messages to the mobile station for 2n consecutive times by simulating the mobile switching center MSC if a protocol version supported by both the mobile station and the MSC is earlier than R99,
send the identity request messages to the mobile station for 4n consecutive times by simulating the mobile switching center MSC if the protocol version supported by both the mobile station and the MSC is R99 or later than R99.

By sending the identity request messages to the mobile station for 2*n consecutive times, the base station controller provided in the embodiment of the present invention receives the identity response messages sent by the mobile station for 2n times. In this way, the sequence number recorded on the mobile station changes back to the sequence number existent before the base station controller sends the identity request messages for 2n times, and the sequence number is synchronized between the mobile switching center and the mobile station, thereby improving stability of a communication system and preventing the following case: due to asynchronous sequence numbers, errors occur when the mobile switching center checks the sequence number of the received uplink non access stratum message.

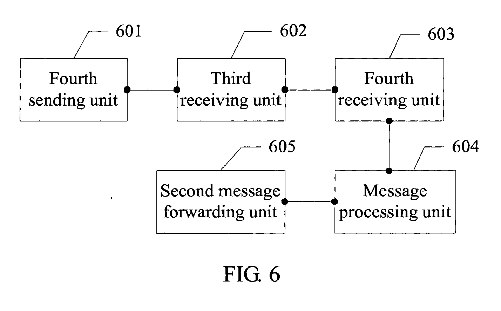

Referring to FIG. 6, FIG. 6 is a schematic structural diagram of a base station controller according to a fourth example.

The base station controller provided in the fourth example includes:
a fourth sending unit 601, configured to send an identity request message to a mobile station by simulating a mobile switching center MSC to request a user identity;
a third receiving unit 602, configured to receive an identity response message sent by the mobile station in response to the identity request message, where a sequence number of the identity response message is S;
a fourth receiving unit 603, configured to receive an uplink non access stratum message sent by the mobile station, where a sequence number of the uplink non access stratum message is S+1;
a message processing unit 604, configured to parse the uplink non access stratum message and modify the sequence number of the uplink non access stratum message to S; and
a second message forwarding unit 605, configured to forward the uplink non access stratum message with the modified sequence number to the mobile switching center.

The base station controller provided in the fourth example may be used to implement the method for obtaining a user identity according to the third embodiment. For the detailed process, reference may be made to the method embodiment for obtaining a user identity, which is not repeated here any further.

By modifying a sequence number in an uplink non access stratum message sent by the mobile station, the base station controller provided in this example is capable of synchronizing sequence numbers between the mobile switching center and the mobile station, thereby improving stability of a communication system and preventing the following case: due to asynchronous sequence numbers, errors occur when the mobile switching center checks the sequence number of the received uplink non access stratum message.

It should be noted that as regards information exchange between units, the implementation process, and other detailed content in the base station controller embodiment, because they are based on the same concept as the method embodiment of the present invention, reference may be made to the description in the method embodiment, and is not repeated here any further.

Persons of skilled in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Read-Only Memory, RAM).

Detailed above are a method for obtaining a user identity and also a base station controller according to the embodiments of the present invention. Persons of ordinary skill in the art can make modifications with respect to the specific implementation mode and the application scope without departing from the ideas of the scope of the present invention as defined by the claims, and the content of the specification shall not be construed as a limitation to the present invention.

## Claims

1. A method for obtaining a user identity, **characterized by** comprising:
sending (201) identity request messages to a mobile station for 2n consecutive times by simulating a mobile switching center, MSC, to request a user identity, wherein n is a positive integer;
receiving (202) identity response messages sent by the mobile station for 2n times in response to the identity request messages sent for the 2n times; and
forwarding (203) messages from the MSC to the mobile station after the sending the identity request messages to the mobile station for 2n consecutive times by simulating the MSC;
wherein no downlink message from the MSC is forwarded to the mobile station in the process of sending the identity request messages for 2n consecutive times.

2. The method according to claim 1, wherein the sending the identity request messages to a mobile station for 2n consecutive times comprises:
sending the identity request messages to the mobile station for 2n consecutive times if a protocol version supported by both the mobile station and the MSC is earlier than R99;
sending the identity request messages to the mobile station for 4n consecutive times if the protocol version supported by both the mobile station and the MSC is R99 or a version later than R99.

3. Abase station controller, **characterized by** comprising:
a third sending unit (501), configured to send identity request messages to a mobile station for 2n consecutive times by simulating a mobile switching center, MSC, to request a user identity, wherein n is a positive integer;
a second receiving unit (502), configured to receive identity response messages sent by the mobile station for 2n times in response to the identity request messages sent for the 2n times; and
a first message forwarding unit (503), configured to forward messages from the MSC to the mobile station after the sending the identity request messages to the mobile station for 2n consecutive times by simulating the MSC;
wherein no downlink message from the MSC is forwarded by the base station controller to the mobile station in the process of sending the identity request messages for 2n consecutive times.

4. The base station controller according to claim 3, wherein the third sending unit is further configured to:
send the identity request messages to the mobile station for 2n consecutive times by simulating the mobile switching center MSC if a protocol version supported by both the mobile station and the MSC is earlier than R99; and
send the identity request messages to the mobile station for 4n consecutive times by simulating the mobile switching center MSC if the protocol version supported by both the mobile station and the MSC is R99 or later than R99.

## Patentansprüche

1. Verfahren für den Erhalt einer Teilnehmeridentität, **gekennzeichnet dadurch, dass** es umfasst:
Senden (201) von Identitätsanforderungsnachrichten an eine mobile Station 2n-mal in Folge, indem eine Mobilvermittlungsstelle (mobile switching center, MSC) simuliert wird, um eine Teilnehmeridentität anzufordern, wobei n eine positive ganze Zahl ist;
Empfangen (202) von Identitätsantwortnachrichten, die von der mobilen Station 2n-mal gesendet wurden, in Reaktion auf die 2n-mal gesendeten Identitätsanforderungsnachrichten; und
Weiterleiten (203) von Nachrichten von der MSC an die mobile Station nach dem Senden der Identitätsanforderungsnachrichten an die mobile Station 2n-mal in Folge, indem die MSC simuliert wird;
wobei beim Prozess des Sendens der Identitätsanforderungsnachrichten 2n-mal in Folge keine Abwärtsstreckennachricht von der MSC an die mobile Station weitergeleitet wird.

2. Verfahren nach Anspruch 1, wobei das Senden der Identitätsanforderungsnachrichten an eine mobile Station 2n-mal in Folge umfasst:
Senden der Identitätsanforderungsnachrichten an die mobile Station 2n-mal in Folge, wenn eine Protokollversion, die von der mobilen Station sowie der MSC unterstützt wird, eine frühere als R99 ist;
Senden der Identitätsanforderungsnachrichten an die mobile Station 4n-mal in Folge, wenn die Protokollversion, die von der mobilen Station sowie der MSC unterstützt wird, R99 oder eine spätere als R99 ist.

3. Basisstationssteuerung, **gekennzeichnet dadurch, dass** sie umfasst:
eine dritte Sendeeinheit (501), die dafür ausgelegt ist, Identitätsanforderungsnachrichten an eine mobile Station 2n-mal in Folge zu senden, indem eine Mobilvermittlungsstelle, MSC, simuliert wird, um eine Teilnehmeridentität anzufordern, wobei n eine positive ganze Zahl ist;
eine zweite Empfangseinheit (502), die dafür ausgelegt ist, Identitätsantwortnachrichten zu empfangen, die von der mobilen Station 2n-mal gesendet wurden, in Reaktion auf die 2n-mal gesendeten Identitätsanforderungsnachrichten; und
eine erste Nachrichtenweiterleiteinheit (503), die dafür ausgelegt ist, Nachrichten von der MSC an die mobile Station weiterzuleiten, nach dem Senden der Identitätsanforderungsnachrichten an die mobile Station 2n-mal in Folge, indem die MSC simuliert wird;
wobei beim Prozess des Sendens der Identitätsanforderungsnachrichten 2n-mal in Folge keine Abwärtsstreckennachricht von der MSC durch die Basisstationssteuerung an die mobile Station weitergeleitet wird.

4. Basisstationssteuerung nach Anspruch 3, wobei die dritte Sendeeinheit ferner dafür ausgelegt ist:
die Identitätsanforderungsnachrichten an die mobile Station 2n-mal in Folge zu senden, indem die Mobilvermittlungsstelle MSC simuliert wird, wenn eine Protokollversion, die von der mobilen Station sowie der MSC unterstützt wird, eine frühere als R99 ist; und
die Identitätsanforderungsnachrichten an die mobile Station 4n-mal in Folge zu senden, indem die Mobilvermittlungsstelle MSC simuliert wird, wenn eine Protokollversion, die von der mobilen Station sowie der MSC unterstützt wird, R99 oder eine spätere als R99 ist.

## Revendications

1. Procédé d'obtention d'une identité d'utilisateur, **caractérisé en ce qu'**il comprend :
l'envoi (201) de messages de requête d'identité à une station mobile 2n fois consécutives en simulant un centre de commutation de services mobiles, MSC, pour demander une identité d'utilisateur, n étant un entier positif ;
la réception (202) de messages de réponse d'identité envoyés par la station mobile 2n fois en réponse aux messages de requête d'identité envoyés 2n fois ; et
l'acheminement (203) de messages depuis le MSC jusqu'à la station mobile après l'envoi des messages de requête d'identité à la station mobile 2n fois consécutives en simulant le MSC;
dans lequel aucun message de liaison descendante depuis le MSC n'est acheminé à la station mobile dans le processus d'envoi des messages de requête d'identité 2n fois consécutives.

2. Procédé selon la revendication 1, dans lequel l'envoi des messages de requête d'identité à une station mobile 2n fois consécutives comprend :
l'envoi des messages de requête d'identité à la station mobile 2n fois consécutives si une version de protocole supportée par à la fois la station mobile et le MSC est antérieure à R99 ;
l'envoi des messages de requête d'identité à la station mobile 4n fois consécutives si la version de protocole supportée par à la fois la station mobile et le MSC est R99 ou une version postérieure à R99.

3. Contrôleur de station de base, **caractérisé en ce qu'**il comprend :
une troisième unité d'envoi (501) configurée pour envoyer des messages de requête d'identité à une station mobile 2n fois consécutives en simulant un centre de commutation de services mobiles, MSC, pour demander une identité d'utilisateur, n étant un entier positif ;
une seconde unité de réception (502) configurée pour recevoir des messages de réponse d'identité envoyés par la station mobile 2n fois en réponse aux messages de requête d'identité envoyés 2n fois ; et
une première unité d'acheminement de messages (503), configurée pour acheminer des messages depuis le MSC jusqu'à la station mobile après l'envoi des messages de requête d'identité à la station mobile 2n fois consécutives en simulant le MSC ;
dans lequel aucun message de liaison descendante depuis le MSC n'est acheminé par le contrôleur de station de base à la station mobile dans le processus d'envoi des messages de requête d'identité 2n fois consécutives.

4. Contrôleur de station de base selon la revendication 3, dans lequel la troisième unité d'envoi est configurée en outre pour :
envoyer les messages de requête d'identité à la station mobile 2n fois consécutives en simulant le centre de commutation de services mobiles MSC si une version de protocole supportée par à la fois la station mobile et le MSC est antérieure à R99 ; et
envoyer les messages de requête d'identité à la station mobile 4n fois consécutives en simulant le centre de commutation de services mobiles MSC si la version de protocole supportée par à la fois la station mobile et le MSC est R99 ou une version postérieure à R99.
